# EUROPEAN PATENT SPECIFICATION

(11) **EP 3 936 310 B1**
(45) Date of publication and mention of the grant of the patent: **26.02.2025**
(21) Application number: 19928361.5
(22) Date of filing: 10.05.2019
(51) Int. Cl.: B23K 26/352, B23K 26/142, B23K 26/16, B29C 39/10, B29C 45/14, B29C 65/02, B23K 13/01, B23K 20/10, B23K 20/12, B23K 103/00, B23K 103/18, B29C 37/00, B29C 43/18, B29C 65/06, B29C 65/08, B29C 65/16, B29C 65/46, B29C 65/82

(54) **METHODS OF PRODUCING A JOINING METAL MEMBER AND A JOINED BODY**
METHODEN ZUR HERSTELLUNG VON EINEM VERBINDUNGSELEMENT AUS METALL UND EINEM VERBUNDKÖRPER
PROCÉDÉS DE FABRICATION D'UN ÉLÉMENT MÉTALLIQUE À JOINDRE ET D'UN CORPS COMPOSITE

(43) Date of publication of application: 12.01.2022
(73) Proprietor: Resonac Corporation, Tokyo 105-7325 (JP)
(72) Inventor: YAMAZAKI, Satoru, Fukuoka 825-0005 (JP)
(74) Representative: Hoffmann Eitle
(86) International application number: PCT/JP2019/018782
(87) International publication number: WO 2020/230200

(56) References cited:
- WO-A1-2018/092607
- WO-A1-2018/092607
- JP-A- 2014 065 288
- JP-A- 2014 065 288
- JP-A- 2016 132 131
- JP-A- S61 174 280
- US-A1- 2005 196 085

## Description

### Technical Field

The present invention relates to a method of producing a metal member for joining and of producing a joined body.

### Background Art

In various formed bodies used for vehicles and the like, there have been considered, for the purpose of weight reduction, dissimilar metal joining between a steel material and a lightweight metal material such as an aluminum alloy or a magnesium alloy, dissimilar material joining between a steel material or a lightweight metal material and a resin material, and the like. Further weight reduction can be expected by joining dissimilar materials of a steel material or a lightweight metal material and a resin material.

Therefore, a method of manufacturing a new composite component by joining and integrating a metal formed body and a resin formed body has been considered. For example, as a method of increasing a processing speed and also increasing a joining strength in different directions, a method of roughening a surface of a metal formed body and a method of manufacturing a composite formed body have been proposed in which the surface of the metal formed body is roughened by continuously irradiating the surface of the metal formed body with laser light at an irradiation speed of 2,000 mm/sec or more with use of a continuous wave laser (see, for example, JP 5774246 A and JP 5701414 A).

A method of producing a metal member for joining is disclosed in JP 2014 065288 A forming the basis for the preamble of claim 1. A similar method is also known from US 2005/196085 A1. JP 61 174280 A and WO 2018/092607 A1 disclose even further methods of producing a metal member for joining.

### SUMMARY OF INVENTION

### Technical Problem

However, in JP 5774246 A and JP 5701414 A, in a case in which the metal formed body is roughened, although a convex shape is formed at a position lower than a reference surface as the surface of the metal formed body before roughening, a convex shape is hardly formed at a position higher than the reference surface in some cases. Therefore, a sufficient anchor effect cannot be obtained, and the joining strength between the roughened metal formed body and the resin formed body or the like may be insufficient.

The present invention has been made in view of the above conventional circumstances, and an object of the invention is to provide a method of producing a metal member for joining having excellent joining strength with a resin member, and a method of producing a joined body obtained by joining the metal member for joining and the resin member to each other.

### Solution to Problem

A method of producing a metal member for joining according to the invention is defined in claim 1. Embodiments are named in the dependent claim. A method of producing a joined body according to the invention is defined in claim 3.

### Advantageous Effects of Invention

The invention can provide a metal member for joining having excellent joining strength with a resin member, and a joined body obtained by joining the metal member for joining and the resin member to each other.

### BRIEF DESCRIPTION OF DRAWINGS

Fig. 1 is a cross-sectional photograph obtained by photographing a cross section of a surface having a smooth part and an uneven part in an embodiment of a metal member for joining from a position higher than a reference surface (an electron micrograph of an uneven part of a brass test piece in Example).
Fig. 2 is a cross-sectional photograph of an uneven part in another embodiment of the metal member for joining (an electron micrograph of an uneven part of an aluminum test piece in Example).
Fig. 3 are diagrams for describing the shape of a test piece in accordance with ISO19095.
Fig. 4 is an electron micrograph of an uneven part of a copper test piece in Example.
Fig. 5 is an electron micrograph of an uneven part of an aluminum test piece in Comparative Example.

### DESCRIPTION OF EMBODIMENTS

Embodiments of the invention are described below in detail. It is noted here, however, that the invention is not restricted to the below-described embodiments. In the below-described embodiments, the constituents thereof (including element steps and the like) are not indispensable unless otherwise specified. The same applies to the numerical values and ranges thereof, without restricting the invention.

in the invention, those numerical ranges that are expressed with "to" each denote a range that includes the numerical values stated before and after "to" as the minimum value and the maximum value, respectively.

In a set of numerical ranges that are stated stepwisely in the invention, the upper limit value or the lower limit value of a numerical range may be replaced with the upper limit value or the lower limit value of other numerical range. Further, in a numerical range stated in the invention, the upper limit or the lower limit of the numerical range may be replaced with a relevant value indicated in any of Examples.

In the invention, a component may include a plurality of different substances corresponding thereto. When there are plural kinds of substances that correspond to a component of a composition, the indicated content ratio or content amount of the component in the composition means, unless otherwise specified, the total content ratio or content amount of the plural kinds of substances existing in the composition.

In the invention, particles corresponding to a component may include a plurality of different kinds of particles. When there are plural kinds of particles that correspond to a component of a composition, the indicated particle size of the component in the composition means, unless otherwise specified, a value determined for a mixture of the plural kinds of particles existing in the composition.

In the invention, "(meth)acrylic" means at least one of acrylic and methacrylic.

### <Metal member for joining>

A metal member for joining produced by the method according to the invention includes a smooth part and an uneven part on one surface of the metal member for joining, in which when a surface of the smooth part is defined as a reference surface, the uneven part includes a plurality of recesses reaching a position lower than the reference surface and a plurality of protrusions protruding to a position higher than the reference surface, and a ratio (B/A) of an average value of a height B from the reference surface to a top of each protrusion and an average value of a depth A from the reference surface to a bottom of each recess is from 0.3 to 3.

The metal member for joining produced by the method according to the invention has excellent joining strength with a resin member. The reason is not clear, but is presumed as follows.

The ratio (B/A) of the metal member for joining is from 0.3 to 3, and it is therefore possible to sufficiently secure the number of protrusions protruding to a position higher than the reference surface existing in the uneven part. Thus, when a resin constituting the resin member is impregnated into the uneven part of the metal member for joining, the protrusion protruding to a position higher than the reference surface is easily entangled with the resin even if the resin does not reach below the reference surface. As a result, it is presumed that a sufficient anchor effect can be obtained, and the metal member for joining and the resin member can be firmly joined to each other.

Hereinafter, the metal member for joining will be described with reference to the drawings.

In the following embodiment, as an example of the metal member for joining, the metal member for joining will be described on the basis of a metal member for joining formed by irradiating a surface of a metal member with laser light to provide an uneven part. However, a material constituting the metal member for joining, and the like are not limited.

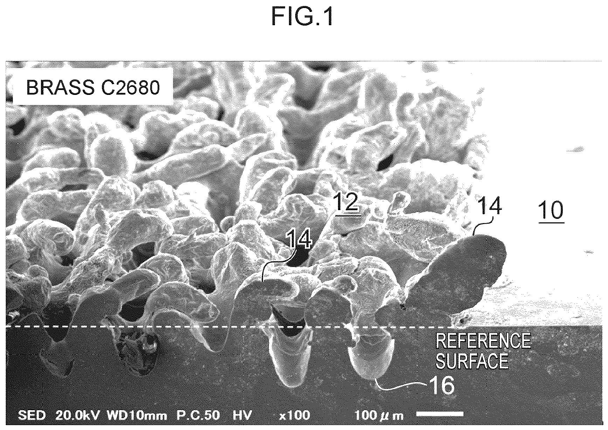

Fig. 1 is a cross-sectional photograph obtained by photographing a cross section of a surface having a smooth part and an uneven part in an embodiment of a metal member for joining from a position higher than a reference surface, and corresponds to an example of an electron micrograph of an uneven part of a brass test piece in Example 3 described later. Fig. 1 illustrates a cross section of a part including the smooth part and the uneven part on the surface having the smooth part and the uneven part. In Fig. 1, a reference surface extending over the entire surface having the smooth part and the uneven part of the metal member for joining is indicated by a dotted line.

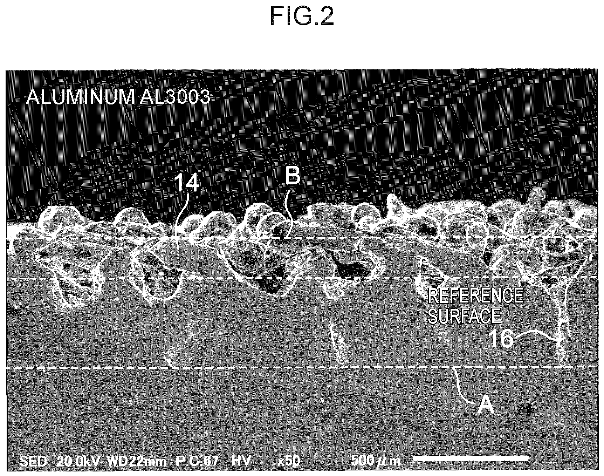

Fig. 2 is a cross-sectional photograph of an uneven part in another embodiment of the metal member for joining, and corresponds to an example of an electron micrograph of an uneven part of an aluminum test piece in Example 1 described later.

As illustrated in Fig. 1, a smooth part 10 and an uneven part 12 exist on one surface of the metal member for joining. As illustrated in Fig. 1 or 2, the uneven part 12 includes a plurality of recesses 16 reaching a position lower than the reference surface and a plurality of protrusions 14 protruding to a position higher than the reference surface.

In Fig. 2, the reference surface extending over the entire surface having the smooth part and the uneven part of the metal member for joining is indicated by a dotted line. In Fig. 2, a surface B that is parallel to the reference surface and is in contact with the top (highest position) of the protrusion 14 and a surface A that is parallel to the reference surface and is in contact with a bottom (deepest position) of the recess 16 are each indicated by dotted lines.

In the invention, the depth A from the reference surface to the bottom of the recess refers to a distance between the reference surface and the surface A that is parallel to the reference surface and is in contact with the bottom of the recess 16 in observation of a cross section orthogonal to the reference surface as illustrated in Fig. 2. In observation of a cross section orthogonal to the reference surface, as illustrated in Fig. 2, the bottom of the recess may be closed from a surface of the metal member for joining.

In the invention, the height B from the reference surface to the top of the protrusion refers to a distance between the reference surface and the surface B that is parallel to the reference surface and is in contact with the top of the protrusion 14 in observation of a cross section orthogonal to the reference surface as illustrated in Fig. 2.

In the invention, the average value of the depth A refers to an arithmetic average value of depths of five recesses obtained as described above. The average value of the height B refers to an arithmetic average value of heights of five protrusions obtained as described above.

A magnification of an observation image of the cross section is not limited, and may be a magnification at which at least five recesses and at least five protrusions are included in one image. The depths of at least five recesses and the heights of at least five protrusions may be obtained from a plurality of observation images.

An average value of the ratio (B/A) is from 0.3 to 3, preferably from 0.3 to 2, and more preferably from 0.3 to 1.

When the average value of the ratio (B/A) is 0.3 or more, it is easy to ensure a state in which the plurality of protrusions existing in the uneven part protrude to a position higher than the reference surface, and the protrusions tend to be easily entangled with the resin. It may be difficult to set the average value of the ratio (B/A) to a value exceeding 3.

The average value of the depth A of the recess 16 is preferably from 100 µm to 1.5 mm, more preferably from 100 µm to 1 mm, and still more preferably from 100 µm to 500 µm.

The average value of the height B of the protrusion 14 is preferably from 50 µm to 1 mm, more preferably from 70 µm to 500 µm, and still more preferably from 90 µm to 200 µm.

A total value of the average value of the depth A and the average value of the height B is preferably from 150 µm to 2.5 mm, more preferably from 170 µm to 1.5 mm, and still more preferably from 190 µm to 700 µm.

A density of the protrusion 14 in the uneven part 12 is preferably from 5 protrusions/mm² to 50 protrusions/mm², more preferably from 10 protrusions/mm² to 30 protrusions/mm², and still more preferably from 10 protrusions/mm² to 25 protrusions/mm².

A metal constituting the metal member for joining is not limited, and can be selected appropriately from known metal materials in accordance with application of the joined body formed with use of the metal member for joining. Examples of the metal constituting the metal member for joining include iron, aluminum, zinc, titanium, copper, magnesium, and alloys including these metals. Examples of the alloy include various stainless steels and copper-zinc alloys (brass).

The surface having the smooth part and the uneven part of the metal member for joining may be subjected to surface treatment such as plating treatment or alumite treatment.

A shape of the metal member for joining is not limited, and can be selected appropriately in accordance with the application of the joined body formed with use of the metal member for joining. Examples of the shape of the metal member for joining include a plate shape, a spherical shape, a shape having a curved surface, and a shape having a step.

The surface having the uneven part of the metal member for joining may be a flat surface.

According to the invention, the method of forming the uneven part on the metal member includes irradiating the surface of the metal member with laser light to provide the uneven part as described above.

Hereinafter, various conditions and the like when adopting a method of irradiating the surface of the metal member with laser light to provide the uneven part will be described.

The following various conditions are set appropriately in terms of a type of metal constituting the metal member for joining, the height of the protrusions, the depth of the recesses, and the like.

According to the invention, the uneven part is provided by irradiating the surface of the metal member with laser light using a modulated continuous wave (CW) laser in which power of the laser is periodically changed.

An irradiation speed (scan speed) of the CW laser is not limited.

The irradiation speed of the CW laser is preferably from 100 mm/sec to 2,000 mm/sec.

When the irradiation speed of the CW laser is 100 mm/sec or more, a processing speed of the metal member is likely to be increased. When the irradiation speed of the CW laser is 2,000 mm/sec or less, the ratio (B/A) is likely to be in a range of from 0.3 to 3, and the joining strength with the resin member tends to be further improved.

An irradiation output of the laser is not limited.

For example, in the case in which the CW laser is used, the laser output is preferably from 300W to 2,000W.

When the laser output of the CW laser is 300W or more, the irradiation speed of the CW laser is easily increased, and the processing speed of the metal member is likely to be increased. When the laser output of the CW laser is 2,000W or less, an irradiation facility of a laser light is likely to be miniaturized.

A spot diameter of the laser is not limited.

For example, the spot diameter of the laser is preferably from 10 µm to 50 µm.

In a case in which the modulated CW laser is used, a modulation method may be a sine wave, a triangular wave, or a rectangular wave.

A frequency of the modulated CW laser is preferably from 1,000 Hz to 10,000 Hz.

In the modulated CW laser, a minimum value of the laser output when a maximum value of the laser output is 100 is preferably 30 or more but less than 100, more preferably from 50 to 95, and still more preferably from 80 to 90.

In a case in which the surface of the metal member is irradiated with laser light, the uneven part may be provided by wobbling.

The laser light may be repeatedly emitted to a part irradiated once with the laser light. In a case in which the laser light is repeatedly emitted, the number of repetitions is preferably from 1 to 40.

As the laser, a solid laser such as a ruby laser, a yttrium aluminum garnet (YAG) laser, or a titanium sapphire laser, a liquid laser such as a dye laser, a gas laser such as a helium neon laser, an argon ion laser, a carbon dioxide gas laser, a nitrogen laser, or an excimer laser, a semiconductor laser, a fiber laser, or the like can be used.

The laser may be a green laser.

When the uneven part is provided by irradiating the surface of the metal member with the laser light, compressed air may be supplied to a part irradiated with the laser light on the surface of the metal member. A pressure of the supplied compressed air is preferably from 0.2 MPa to 0.5 MPa in terms of efficiently removing metal powder generated by irradiation with the laser light.

When the laser light is linearly emitted, a scanning interval of the laser light is preferably larger than the spot diameter of the laser light.

### <Joined body>

A joined body according to the invention includes the metal member for joining produced by the method according to the invention, and the resin member joined to the surface having the smooth part and the uneven part of the metal member for joining.

Since the resin member is joined to the surface having the smooth part and the uneven part of the metal member for joining, the joined body according to the invention has an excellent joining strength between the metal member for joining and the resin member.

A type of the resin constituting the resin member is not limited, and a conventionally known resin can be appropriately selected and used in accordance with the application of the joined body.

Examples of the resin include a thermosetting resin, a thermoplastic resin, and elastomer.

Specific examples of the thermosetting resin include a phenol resin, an unsaturated imide resin, a cyanate resin, an isocyanate resin, a benzoxazine resin, an oxetane resin, an amino resin, an unsaturated polyester resin, an allyl resin, a dicyclopentadiene resin, a silicone resin, a triazine resin, a melamine resin, a resorcinol resin, and an epoxy resin.

Specific examples of the thermoplastic resin include a polyimide resin, a polyamideimide resin, a polyamide resin, a polyetherimide resin, a polybenzoxazole resin, a polybenzimidazole resin, a polystyrene resin, an acrylonitrile-butadiene-styrene copolymer resin, an acrylonitrile-styrene copolymer resin, a polyethylene resin, a polypropylene resin, a polyvinyl chloride resin, a polyvinylidene chloride resin, a polycarbonate resin, a (meth) acrylic resin, a polyester resin, a polyacetal resin, and a polyphenylene sulfide resin.

Specific examples of the elastomer include silicone rubber, styrene-butadiene rubber (SBR), nitrile rubber (NBR), and urethane rubber.

The resin member may contain other conventionally known components other than the resin in accordance with the application of the joined body. Examples of other components include particulate fillers, fibrous fillers, and release agents.

Examples of other components further include a curing agent that cures the thermosetting resin, a curing accelerator that accelerates curing of the thermosetting resin, and a surface treatment agent that modifies a surface of an inorganic material.

The content of other components other than the resin included in the resin member may be appropriately set in accordance with the application of the joined body.

A method of manufacturing the joined body is not limited, and a normal method of molding a resin formed body can be adopted, such as an injection molding method, a blow molding method, a compression molding method, a transfer molding method, an extrusion molding method, or a cast molding method. A resin composition including a resin and, if necessary, other components may be applied to the surface provided with the uneven part, of the metal member for joining provided with the uneven part, as described above by an insert molding method to manufacture a joined body.

Furthermore, the metal member for joining provided with the uneven part may be brought into contact with the resin member, and then the metal member for joining and the resin member may be joined by ultrasonic welding, vibration welding, induction welding, high-frequency welding, laser welding, heat welding, spin welding, or the like.

The metal member for joining and the resin member may be joined by heating and softening a part of the resin member to be joined to the metal member for joining and then bringing the resin member and the metal member for joining into contact with each other while pressurizing the resin member and the metal member for joining.

In terms of preventing deformation of the protrusions in the uneven part and improving the joining strength, the joined body is preferably manufactured by the insert molding method.

In a case in which a thermosetting resin is used as a component of the resin member, the metal member for joining and the resin member may be joined by the above method, and then the resin member may be cured by heat treatment.

Examples of the applications of the joined body according to the invention include various formed bodies used in vehicles and the like, and specific examples thereof include a side door, a hood, a roof, a back door, a luggage door, a bumper, and a crash box, but are not limited thereto.

### Examples

Hereinafter, the invention will be described based on Examples, but the invention is not limited thereto.

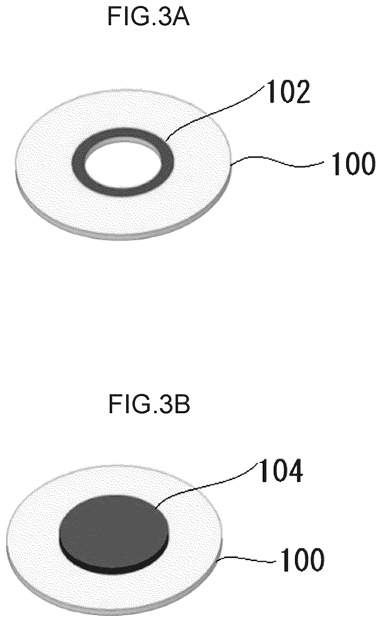

Doughnut-shaped test pieces 100 including aluminum (AL 3003), copper (C 1020), and brass (C 2680) having an outer diameter of 55 mm, an inner diameter of 20 mm, and a thickness of 2 mm in accordance with ISO19095 as illustrated in Fig. 3(A) were prepared.

On the test piece 100, an uneven part 102 was formed under the following conditions using a fiber laser (ML6811C (CW laser) manufactured by Amada Miyachi Co., Ltd.). A width of the uneven part 102 was set to 1.2 mm.

**[Table 1]**

| | Setting Value | | | | | |
|---|---|---|---|---|---|---|
| | metal | laser output | scan speed | frequency | modulated CW control | number of repetition |
| Example 1 | AL 3003 | 350 W | 1500 mm/sec | 5,000 Hz | With control | 15 |
| Example 2 | C 1020 | 450 W | 1200 mm/sec | 5,000 Hz | With control | 30 |
| Example 3 | C 2680 | 450 W | 1500 mm/sec | 5,000 Hz | With control | 20 |
| Comparative Example 1 | AL 3003 | 450 W | 1500 mm/sec | 5,000 Hz | With control | 1 |

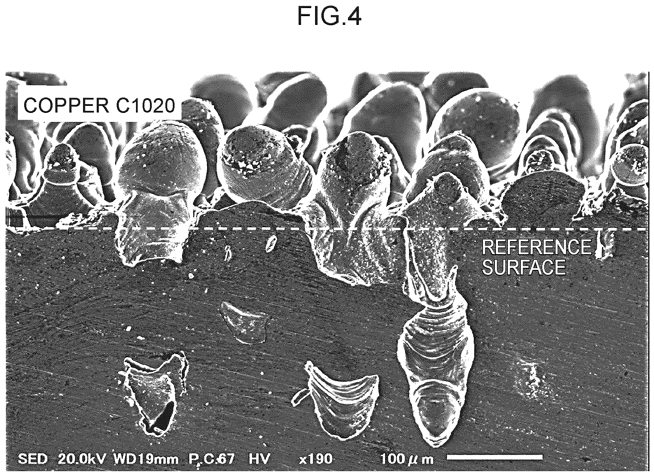

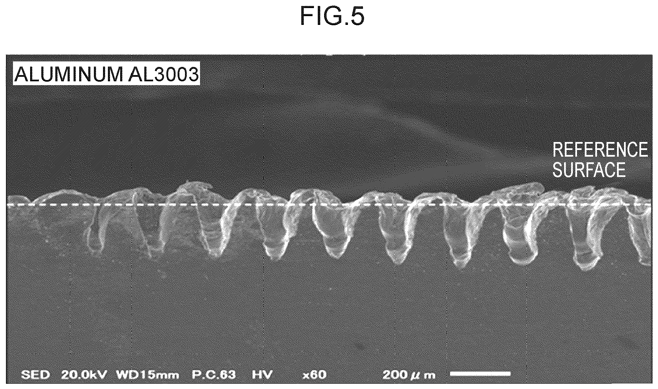

Fig. 2 illustrates an example of an electron micrograph of the uneven part of the aluminum test piece of Example 1. Fig. 4 illustrates an example of an electron micrograph of the uneven part of the copper test piece of Example 2. Fig. 1 illustrates an example of an electron micrograph of the uneven part of the brass test piece of Example 3. Fig. 5 illustrates an example of an electron micrograph of the uneven part of the aluminum test piece of Comparative Example 1.

As is apparent from Figs. 1, 2, and 4, the uneven part of each test piece of Examples 1, 2 and 3 has a plurality of recesses reaching a position lower than the reference surface and a plurality of protrusions protruding to a position higher than the reference surface.

The electron micrographs of the test pieces were taken at an acceleration voltage of 20 kV with use of JSM-IT100 manufactured by JEOL Ltd.

The ratio (B/A) in the uneven part of the aluminum test piece of Example 1 was determined as described above, and found to be 0.4. The average value of the depth A was 380 µm.

The ratio (B/A) in the uneven part of the copper test piece of Example 2 was determined as described above, and found to be 0.5. The average value of the depth A was 220 µm.

The ratio (B/A) in the uneven part of the brass test piece of Example 3 was determined as described above, and found to be 0.9. The average value of the depth A was 120 µm.

The ratio (B/A) in the uneven part of the aluminum test piece of Comparative Example 1 was determined as described above, and found to be 0.2. The average value of the depth A was 190 µm.

Subsequently, a resin part 104 as illustrated in Fig. 3(B) was injection-molded under the conditions of a resin heating temperature of 210°C and a mold temperature of 80°C with use of an injection molding machine LA60 manufactured by Sodick Co., Ltd. to cover the uneven part of each test piece provided with the uneven part. A size of the resin part 104 was 26 mm in outer diameter and 2 mm in thickness. As the resin, a polyacetal (POM) resin (standard grade M90-44) manufactured by Polyplastics Co., Ltd. was used.

The joining strength was evaluated by the following method with use of each test piece provided with the resin part. Five test pieces for evaluation of the joining strength were prepared for each of Examples and Comparative Examples.

### Evaluation Method

AG-5kNIS manufactured by SHIMADZU CORPORATION was used to perform a tensile test at a test speed of 5 mm/min, the joining strength of five joined bodies was determined, and the average value thereof was calculated.

In the joining with the POM resin, the joining strength for each test piece was as follows.

The average value of the joining strength of the aluminum test piece of Example 1 was 17.8 MPa.

The average value of the joining strength of the copper test piece of Example 2 was 14.7 MPa.

The average value of the joining strength of the brass test piece of Example 3 was 22.4 MPa.

The average value of the joining strength of the aluminum test piece of Comparative Example 1 was 0 MPa.

### Reference Signs List

10 Smooth part
12 Uneven part
14 Protrusion
16 recess
100 Test piece
102 Uneven part
104 Resin part

## Claims

1. A method of producing a metal member for joining comprising a smooth part (10) and an uneven part (12) on one surface of the metal member for joining, wherein:
when a surface of the smooth part (10) is defined as a reference surface, the uneven part (12) has a plurality of recesses (16) reaching a position lower than the reference surface and a plurality of protrusions (14) protruding to a position higher than the reference surface, and
a ratio (B/A) of an average value of a height B from the reference surface to a top of each protrusion (14) and an average value of a depth A from the reference surface to a bottom of each recess (16) is from 0.3 to 3, **characterized in that**
the uneven part (12) is provided by irradiating the one surface of the metal member with laser light using a modulated continuous wave laser in which power of the laser is periodically changed.

2. The method of producing a metal member for joining according to claim 1,
wherein the average value of the depth A is from 100 µm to 1.5 mm.

3. A method of producing a joined body, the method comprising:
the method of producing a metal member for joining according to claim 1 or 2;
wherein the joined body comprises a resin member joined to a surface of the metal member for joining, the surface comprising the smooth part (10) and the uneven part (12).

## Patentansprüche

1. Verfahren zur Herstellung eines Metallelements zum Verbinden, das einen glatten Teil (10) und einen unebenen Teil (12) auf einer Oberfläche des Metallelements zum Verbinden umfasst, wobei:
wenn eine Oberfläche des glatten Teils (10) als Referenzfläche definiert ist, der unebene Teil (12) eine Vielzahl von Vertiefungen (16) aufweist, die eine Position unterhalb der Referenzfläche erreichen, und eine Vielzahl von Vorsprüngen (14), die eine Position oberhalb der Referenzfläche erreichen, und
ein Verhältnis (B/A) eines Durchschnittswerts einer Höhe B von der Referenzfläche zu einer Spitze jedes Vorsprungs (14) und eines Durchschnittswerts einer Tiefe A von der Referenzfläche zu einem Boden jeder Vertiefung (16) von 0,3 bis 3 beträgt, **dadurch gekennzeichnet, dass**
der unebene Teil (12) durch Bestrahlung der einen Oberfläche des Metallelements mit Laserlicht unter Verwendung eines modulierten Dauerstrichlasers, bei dem die Leistung des Lasers periodisch geändert wird, erzeugt wird.

2. Verfahren zur Herstellung eines Metallelements zum Verbinden nach Anspruch 1, wobei der Durchschnittswert der Tiefe A zwischen 100 µm und 1,5 mm liegt.

3. Verfahren zur Herstellung eines Verbundkörpers, wobei das Verfahren umfasst:
das Verfahren zur Herstellung eines Metallelements zum Verbinden nach Anspruch 1 oder 2; wobei der Verbundkörper ein Harzelement umfasst, das mit einer Oberfläche des Metallelements zum Verbinden verbunden ist, wobei die Oberfläche den glatten Teil (10) und den unebenen Teil (12) umfasst.

## Revendications

1. Procédé de production d'un élément métallique de jonction comprenant une partie (10) lisse et une partie (12) irrégulière sur une surface de l'élément métallique de jonction, dans lequel :
lorsqu'une surface de la partie (10) lisse est définie comme une surface de référence, la partie (12) irrégulière présente une pluralité d'évidements (16) atteignant une position inférieure à la surface de référence et une pluralité de saillies (14) faisant saillie vers une position supérieure à la surface de référence, et
un rapport (B/A) d'une valeur moyenne d'une hauteur B de la surface de référence à un haut de chaque saillie (14) et d'une valeur moyenne d'une profondeur A de la surface de référence à un bas de chaque évidement (16) est de 0,3 à 3, **caractérisé en ce que**
la partie (12) irrégulière est fournie en irradiant l'une des surfaces de l'élément métallique avec de la lumière laser à l'aide d'un laser à onde continue modulée dans lequel la puissance du laser est modifiée périodiquement.

2. Procédé de production d'un élément métallique de jonction selon la revendication 1, dans lequel la valeur moyenne de la profondeur A est de 100 µm à 1,5 mm.

3. Procédé de production d'un corps de jonction, le procédé comprenant :
le procédé de production d'un élément métallique de jonction selon la revendication 1 ou la revendication 2 ; dans lequel le corps de jonction comprend un élément en résine joint à une surface de l'élément métallique pour réaliser la jonction, la surface comprenant la partie (10) lisse et la partie (12) irrégulière.
